# EUROPÄISCHE PATENTSCHRIFT

(11) **EP 0 524 609 B1**
(45) Veröffentlichungstag und Bekanntmachung des Hinweises auf die Patenterteilung: **27.11.1996**
(21) Anmeldenummer: 92112478.0
(22) Anmeldetag: 21.07.1992
(51) Int. Cl.: E01C 5/20, A01K 1/015

(54) **Bodenbelag aus Verbundpflastersteinen aus Recycling-Kunststoff mit einem Drainage-System sowie Verbundpflasterstein hierfür**
Ground coverings composed of interlocking paving elements made up of recycled plastics and comprising a drainage system, and interlocking paving element therefor
Revêtement de sol composé de pavés autobloquant en matière plastique recyclée et comprenant un système de drainage, et élément de pavé autobloquant pour celui-là

(30) Priorität: 25.07.1991 DE 9109165 U
(43) Veröffentlichungstag der Anmeldung: 27.01.1993
(73) Patentinhaber: ABO SYSTEM-ELEMENTE GmbH, D-42579 Heiligenhaus (DE)
(72) Erfinder: Harnapp, Bernd, Dipl.-Ing., W-5628 Heiligenhaus (DE)
(74) Vertreter: Schumacher, Horst, Dr. Dipl.-Phys.

(56) Entgegenhaltungen:
- BE-A- 750 281
- DE-A- 1 534 273
- DE-A- 2 614 095
- DE-A- 3 041 624
- DE-U- 8 809 820
- FR-A- 2 656 890

## Beschreibung

Die Erfindung betrifft einen Boden- belag aus Verbundpflastersteinen aus Recycling-Kunststoff mit einem Drainage-System sowie einen Verbundpflasterstein hierfür.

Die weit verbreiteten Verbundpflastersteine aus Holz oder Beton haben den Vorteil einer gewissen Saugfähigkeit gegenüber Wasser, welchen Verbundpflastersteine aus Kunststoff nicht oder nur im vergleichsweise geringem Maße aufweisen.

Die Verbundpflastersteine aus Recycling-Kunststoff (DE-A1-2614095) bestehen in der Regel aus nicht sortenrein zu trennenden Kunststoffen, wie sie bei Verpackungen fast aller Arten, insbesondere aber von Lebensmitteln auftreten. Diese Verpackungen bestehen häufig aus einem Verbund mehrerer verschiedener Grundbestandteile, wie Metallen, insbesondere in Form von Folien und speziell aus Aluminium, verschiedenen Kunststoffen sowie gelegentlich auch Bestandteilen aus Naturprodukten, wie Kork und Pappe. Beim Recyclen von Kunststoffen aus derartigem Verpackungsmaterial fallen nicht nur verschiedene Kunststofftypen an, sondern die Kunststoffe enthalten auch noch gewisse Bestandteile der übrigen Verpackungsmaterialien.

Die in der DE-A1-26 14 095 offenbarten Verbundpflastersteine weisen in ihrer Bodenfläche eine zentrale Ausnehmung auf, die einer einfacheren Verlegung der Verbundpflastersteine dienen und werden mit nicht zu großem Fugenabstand verlegt. Insbesondere wird vorgeschlagen, die Fugen durch bekannte Vergießmassen, z. B. durch Heißbitumen, zu vergießen. Auf einem aus derartigen Verbundpflastersteinen gebildeten Verbundpflaster anfallendes Oberflächenwasser kann nur auf der Oberfläche des Pflasters abgeführt werden.

An ihrer Unterseite mit gradlinig und/oder rechtwinkligen Ausnehmungen versehene Pflastersteine, die auch aus Kunststoff hergestellt sein können, sind aus der DE-A1-30 41 624 bekannt. Von oben her auf das durch diese Pflastersteine gebildete Pflaster auffallendes Wasser kann in den zwischen den Pflastersteinen gebildeten Fugen versickern und durch die tunnelartigen Ausnehmungen an der Unterseite der Steine zu Regenwassersammlern ablaufen. Die tunnelartigen Ausnehmungen zeigen sich jedoch bei größeren Mengen von auf das Pflaster auffallenden Wassers überfordert, so daß das von den Ausnehmungen nicht aufgenommene Wasser über die Oberfläche des Pflasters abgeführt werden muß bzw. auf der Oberfläche des Pflasters verbleibt.

Um Bodenbelägen (Verbundpflastern) aus Verbundpflastersteinen aus Recycling-Kunststoff die gleichen oder gar überlegene Eigenschaften im Vergleich zu Bodenbelägen aus Verbundpflastersteinen aus anderen Materialien, wie z. B. Beton oder Holz, insbesondere hinsichtlich der Fähigkeit größere Mengen von Flüssigkeit, insbesondere Wasser rasch aufzunehmen und abzuführen zu verleihen, wird ein Bodenbelag mit den Merkmalen des Anspruchs 1 vorgeschlagen. Ein Verbundpflasterstein hierfür weist die Merkmale des Anspruchs 9 auf.

Mit einem erfindungsgemäß gestalteten Drainage-System wird auf dem Verbundpflaster anfallendes Oberflächenwasser mit großer Schnelligkeit von dem Untergrund, auf dem das Pflaster verlegt ist, aufgenommen (bei wasserdurchlässigen Untergründen) oder es kann (bei Verlegung des Pflasters auf einem mehr oder minder wasserundurchlässigen Untergrund, über diesen Untergrund - sozusagen "unter Flur" - zu einem Abfluß hin ablaufen. Auf diese Weise kann ein erfinaungsgemäßer Bodenbelag aus Verbundpflastersteinen aus Recycling-Kunststoff mit Drainage-System auch Stallmatten aus Kunststoff oder Gummi - bei erheblich verbesserter Wasserabführung - ersetzen. Das gegen fast alle vorkommenden aggressiven Einflüsse, wie die meisten Säuren aber auch Urin und Kot beständige Pflaster braucht weder imprägniert zu werden, ist absolut wartungsfrei, abriebfest, witterungs- und frostbeständig. Insbesondere hat es wärmeisolierende und lärmdämpfende Wirkung, ist einfach zu verlegen, reparaturfreundlich (da stellenweises Ausbessern problemlos möglich) und weist eine vergleichsweise elastische Oberfläche auf, was das Pflaster besonders geeignet für Huftiere, wie unbeschlagene Pferde, Schweine, Rinder u. dgl. macht. Außerdem sind Verbundpflastersteine aus Recycling-Kunststoff sehr maßhaltig, dehnen sich also kaum aus, so daß die für das Abfließen von Oberflächenwasser zwischen benachbarten Steinen erforderlichen und beim Verlegen berücksichtigten Verlegefugen ihr Maß behalten. Ein weiterer Vorteil ist das relativ geringe Flächengewicht, welches auch eine Verlegung auf Balkonen, Dachterrassen u. dgl., wo Abdichtungs- und Führungsprovon Oberflächenwasser ebenfalls bedeutsam sind. Im übrigen sind derartige Pflastersteine aus Recycling-Kunststoff nicht nur einfach zu verlegen, sondern auch einfach an bauliche Maße, wie z. B. die Ränder der gepflasterten Flächen anzupassen, da es mit normalem Handwerkszeug bearbeitet, insbesondere gesägt werden kann. Erfindungsgemäße Verbundpflastersteine sind sowohl im Freien als auch in Innenräumen, wie Stallungen, Naßbetrieben (Mostereien, Brauereien, Abfüllbetrieben, Galvanikbetrieben etc.) und dergleichen einsetzbar.

Zweckmäßige Ausgestaltungen des Erfindungsgegenstandes, die insbesondere eine schnelle Abführung von Oberflächenwasser gewährleisten, sind in weiteren Ansprüchen enthalten.

Die vorgenannten, sowie die beanspruchten und in dem nachfolgenden Ausführungsbeispiel beschriebenen, erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der - beispielhaft - eine bevorzugte Ausführungsform eines erfindungsgemäßen Drainage-Systems und hierfür dienende Verbundpflastersteine aus Kunststoff, insbesondere aus Recycling-Kunststoff, dargestellt sind. In der Zeichnung zeigen:
- Fig. 1: einen Bodenbelag aus Verbundpflastersteinen mit einem erfindungsgemäßen Drainage-System in Ansicht von oben - Ansicht B gemäß Fig. 2 (ausschnittsweise);
- Fig. 2: denselben Bodenbelag im Vertikalschnitt - Schnitt entlang der Linie II - II gemäß Fig. 1 (im vergrößerten Ausschnitt);
- Fig. 3: einen Verbundpflasterstein für das Drainage-System nach Fig. 1 und 2 in perspektivischer Ansicht von der Seite leicht von schräg oben gesehen;
- Fig. 4: denselben Verbundpflasterstein in perspektivischer Ansicht von der Seite aber leicht von schräg unten gesehen;
- Fig. 5: denselben Verbundpflasterstein in einer reinen Seitenansicht (Ansicht A gemäß Fig. 6 und 7);
- Fig. 6: denselben Verbundpflasterstein in Ansicht von oben (Ansicht B gemäß Fig. 5 und 7);
- Fig. 7: denselben Verbundpflasterstein bei einer zweiten Seitenansicht (Ansicht C gemäß Fig. 5 und 6) sowie
- Fig. 8: eine alternative Ausführungsform eines erfindungsgemäßen Verbundpflastersteines in der Form eines Doppelsechsecksteines (Zwillingsstein) in der gleichen Darstellungsart wie in Fig. 3.

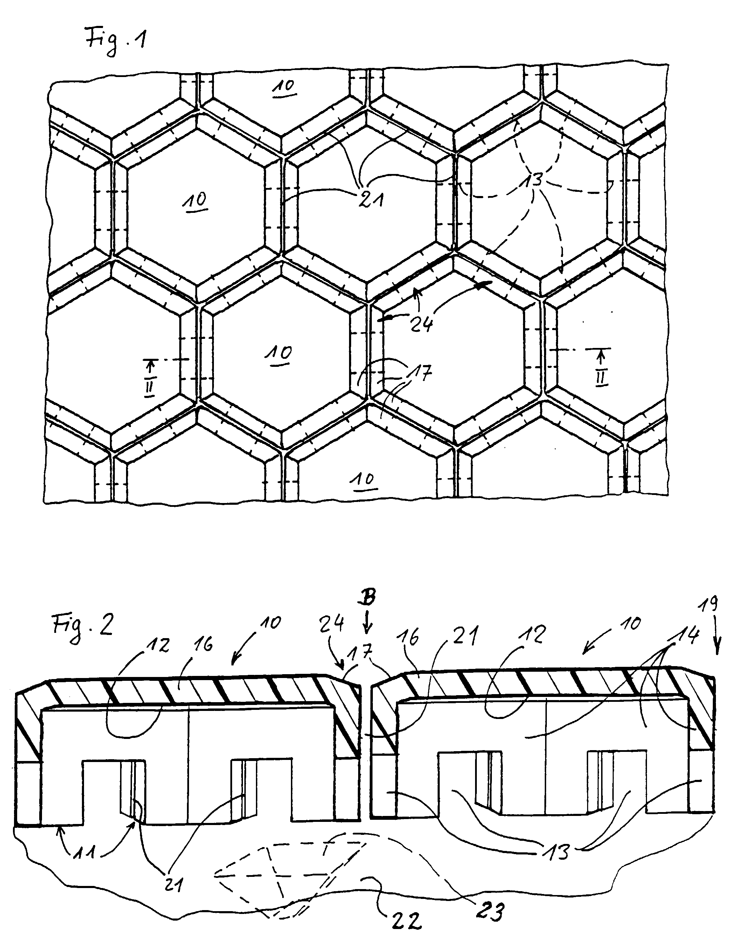

Figur 1 zeigt einen Bodenbelag aus Recycling-Kunststoff. Die in Draufsicht regelmäßige Sechsecke bildenden Verbundpflastersteine 10 sind mosaikartig so verlegt, daß zwischen den aneinandergrenzenden Verbundpflastersteinen konstant breite Pflasterfugen 21 verbleiben.

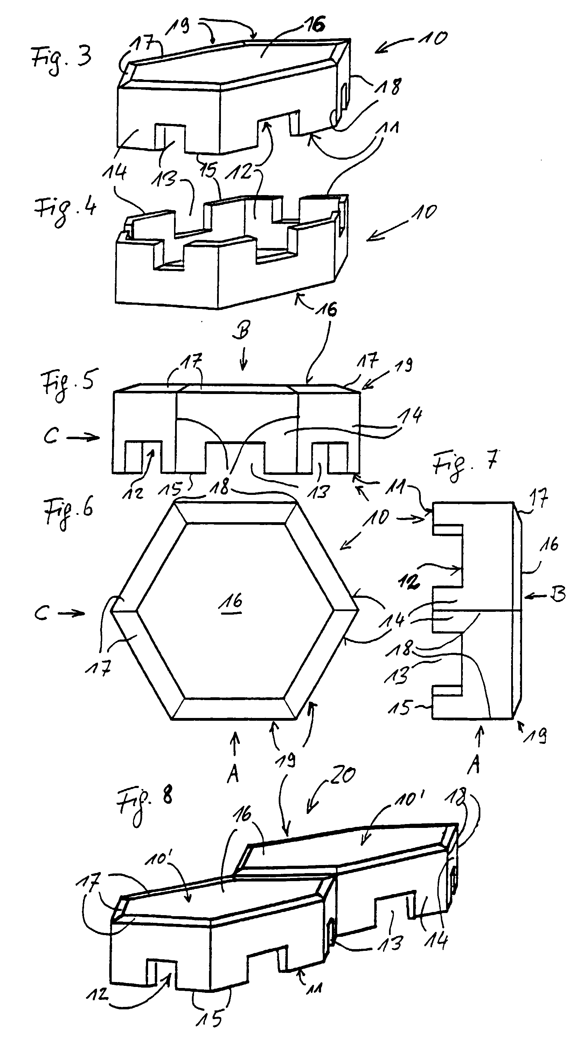

Aus Figur 2 ist ersichtlich, daß die einzelnen Verbundpflastersteine 10, deren geometrischer Aufbau im Zusammenhang mit den Figuren 3 bis 8 noch näher erläutert werden wird, innen hohl und an ihren Seitenwänden 14 mit bodenseitigen Durchbrechungen 13 versehen sind. Im Zusammenwirken mit dem Untergrund 22 , auf dem die Verbundpflastersteine 10 in beliebiger Technik, z. B. auch durch Verkleben verlegt sind, bilden die Pflasterfugen 21 zusammen mit den zentralen Ausnehmungen 12 der Pflastersteine 10 und den Randdurchbrechungen 13 ein zusammenhängendes netzförmiges Drainage-System, welches eine spontane Aufnahme relativ großer Flüssigkeitsmengen sowie deren rasche Versickerung im Untergrund 22 oder in einem mit dem netzförmigen Drainage-System verbundenen Abfluß 23 , dessen Oberkante sich vorteilhafterweise mit dem Untergrund 22 auf einer Höhe befindet und der in Figur 2 lediglich schematisch angedeutet ist, ermöglicht. - Aus der Darstellung von Figur 1, in der die in Draufsicht verdeckten Durchbrechungen 13 gestrichelt dargestellt sind, ergibt sich die relative Großflächigkeit und starke Vernetztheit des erfindungsgemäßen Drainage-Systems. Ferner wird deutlich, daß die begehbare äußere Oberfläche der Steindeckel 16 keine störenden Durchbrechungen aufweisen, so daß sich die das anfallende Oberflächenwasser fortführenden sichtbaren Oberflächenbereiche der Verbundpflastersteine im wesentlichen auf die zwischen ihnen verbleibenden Pflasterfugen 21 und die von Fasenflächen 17 an den Steinkanten gebildeten Rinnen 24 beschränken.

Wie aus Figur 3 ersichtlich, weist ein erfindungsgemäß verwendbarer Verbundpflasterstein aus Recycling-Kunststoff, in seiner Bodenfläche 11 eine großflächige zentrale Ausnehmung 12 und Durchbrechungen 13 in allen sechs Seitenwänden 14 auf, und zwar derart, daß die Durchbrechungen 13 an der unteren Pflastersteinkante 15 beginnen und sich nach oben bis annähernd auf die halbe Steinhöhe erstrecken und die äußeren, im verlegten Zustand im wesentlichen senkrecht orientierten Oberflächen der Seitenwände 14 mit der zentralen Ausnehmung 12 verbinden, also im wesentlichen die Form eines auf dem Kopf stehenden U aufweisen.

In dem dargestellten und insoweit bevorzugten Ausführungsbeispiel weist ein erfindungsgemäß verwendbarer Verbundpflasterstein 10 bzw. Mehrlingsstein, wie Doppelsechseckstein 20 (Fig. 6) etwa konstante Wandstärken sowohl im Bereich der Seitenwände 14, als auch im Bereich des Steindeckels 16 auf.

Dieser Verbundpflasterstein, der sowohl als Monostein (wie in Fig. 3), als auch als Doppelsechseckstein (wie in Fig. 8), aber auch als Drillings- und Vierlingsstein jeweils in frei wählbaren Größen herstellbar sind, wobei im Falle der Mehrlingssteine es sich um werksseitig zu einem Gesamtstein verbundene Einzelsteine vorzugsweise gleicher Grundmaße handelt, die aber gemeinsame Verbindungswände aufweisen, die vorzugsweise ebenfalls mit Durchbrechungen 13 in den Verbindungswänden vorgesehen sind, wobei benachbarte Teilsteine keine gemeinsame Verbindungswand aufweisen und der Mehrlingsstein insgesamt einstückig hergestellt ist, wird eine sechseckige Grundform, wie in allen Figuren dargestellt, bevorzugt, u. a. deshalb, weil in diesem Fall besonders hohe mechanische Festigkeiten bei vergleichsweise vielen Steinfugen zu benachbarten Steinen und wasserführenden Durchbrechungen 13 an der unteren Steinkante realisierbar sind - von dem optisch vorteilhaften Eindruck einmal ganz abgesehen.

Weiterhin sind an den oberen Steinkanten vorzugsweise Fasenflächen 17 vorgesehen, die mit einer Neigung von vorzugsweise 10° bis 45° zu den (von oben betrachteten) äußeren Steinrändern hin geneigt sind, und die Abführung von Oberflächenwasser und Konzentrierung dieses Oberflächenwassers auf die Steinfugen fördern, ohne daß die so entstehenden Rillen zwischen benachbarten Steinen (siehe auch Fig. 2) beim Begehen des verlegten Pflasters hinderlich oder gar gefährlich sind und dennoch leicht mit dem Besen gereinigt, d. h. freigekehrt werden kann. Hierdurch ist es auch möglich, relativ schmale Pflasterfugen 21 zwischen benachbarten Steinen zu lassen, ohne daß die Konzentrierung des Oberflächenwassers auf die Steinfugen dadurch beeinträchtigt wird.

## Patentansprüche

1. Bodenbelag aus Verbundpflastersteinen aus Recycling-Kunststoff mit einem Drainage-System, wobei
zwischen den aneinandergrenzenden, mosaikartig verlegten Verbundpflastersteinen das Oberflächenwasser in die Richtung zur Steinunterkante führende, in Draufsicht etwa konstant breite Pflasterfugen (21) vorgesehen sind,
in den Bodenflächen (11) der Verbundpflastersteine (10, 20) eine oder mehrere, zentrale Ausnehmung/en (12) vorgesehen ist/sind,
in zumindest einem Teil, vorzugsweise in allen, zur Bodenfläche (11) vorzugsweise senkrecht sich erstreckenden Seitenwänden (14) eine oder mehrere Durchbrechung/en (13) vorgesehen ist/sind,
sich die Durchbrechung/en (13) nahe der Pflastersteinunterkante (15) befindet/befinden, vorzugsweise unter Einschluß der Pflastersteinunterkante (15), d. h. mit einer nach unten offenen Form, und die von den äußeren Oberflächen der Seitenwände (14) gebildeten Pflasterfugen (21) mit der/den zentralen Ausnehmung/en (12) unter Ausbildung eines netzförmigen Drainage-Systems verbindet/verbinden, und
die zentrale/n Ausnehmung/en (12) relativ großflächig im Vergleich zu den Bodenflächen (11) der Verbundpflastersteine (10, 20) ist/sind und eine zumindest von den Seitenwänden (14) sowie einem Steindeckel (16) des Verbundpflastersteines umgrenzten inneren Hohlraum bildet/bilden, in den relativ große Flüssigkeitsmengen aufgenommen werden können, wobei die Seitenwände (14) und der Steindeckel (16) des Verbundpflastersteines im Vergleich zu seiner Bodenfläche (11) relativ dünnwandig ausgebildet sind.

2. Bodenbelag nach Anspruch 1, dadurch gekennzeichnet, daß sich die Durchbrechungen (13) der Verbundpflastersteine etwa in der Mitte der jeweiligen Seitenwand (14) zwischen den vertikalen Steinkanten (18) befinden.

3. Bodenbelag nach Anspruch 1 oder 2, dadurch gekennzeichnet, daß sich die Durchbrechungen (13) der Verbundpflastersteine von der Pflastersteinunterkante (15) bis etwa auf die halbe Steinhöhe erstrecken.

4. Bodenbelag nach einem der Ansprüche 1 bis 3, dadurch gekennzeichnet, daß die Verbundpflastersteine eine sechseckige, insbesondere regelmäßig sechseckige - auch vier- oder rechteckige bzw. spiegelsymmetrische Grundrißform aufweisen.

5. Bodenbelag nach einem der Ansprüche 1 bis 4, dadurch gekennzeichnet, daß die Dicken der Seitenwände (14) der Verbundpflastersteine ungefähr gleich stark sind und der Steindeckel (16) vorzugsweise ebenfalls etwa diese oder eine größere Dicke aufweist.

6. Bodenbelag nach einem der Ansprüche 1 bis 5, gekennzeichnet durch Fasenflächen (17) an den oberen Steinkanten (19) der Verbundpflastersteine mit einer zu den Seitenwänden (14) hin abfallenden Neigung, insbesondere in einem Winkel zwischen etwa 10° bis 45° auf die Steindeckeloberfläche bezogen, vorzugsweise etwa 20° bis 35°.

7. Bodenbelag nach einem der Ansprüche 1 bis 6, dadurch gekennzeichnet, daß mehrere Teilsteine (10') einen Mehrlingsstein (Zwillingsstein 20) bilden.

8. Bodenbelag nach Anspruch 7, dadurch gekennzeichnet, daß zwei aneinander grenzende Teilsteine (10') eine gemeinsame Verbindungsseitenwand aufweisen.

9. Verbundpflasterstein aus Recycling-Kunststoff für die Ausbildung eines Drainage-Systems nach einem der Patentansprüche 1 bis 8,
wobei in der Bodenfläche (11) des Verbundpflastersteins (10, 20) eine oder mehrere zentrale Ausnehmung/en (12) vorgesehen ist/sind,
in zumindest einem Teil, vorzugsweise in allen zur Bodenfläche (11) vorzugsweise senkrecht sich erstrekkenden Seitenwänden (14), eine oder mehrere Durchbrechung/en (13) vorgesehen ist/sind,
sich die Druchbrechung/en (13) nahe der Pflastersteinunterkante (15) befindet/befinden, vorzugsweise unter Einschluß der Pflastersteinunterkante (15),
die Durchbrechung/en (13), die äußere Oberfläche der Steinwände (14) mit der/den zentrale/n Ausnehmung/en (12) verbindet/verbinden, und
die zentrale/n Ausnehmung/en (12) relativ großflächig im Vergleich zu der Bodenfläche (11) des Verbundpflastersteins (10, 20) ist/sind und eine zumindest von den Seitenwänden (14) sowie einem Steindeckel (16) des Verbundpflastersteines umgrenzten inneren Hohlraum bildet/bilden, in den relativ große Flüssigkeitsmengen aufgenommen werden können, wobei die Seitenwände (14) und der Steindeckel (16) des Verbundpflastersteines im Vergleich zu seiner Bodenfläche (11) relativ dünnwandig ausgebildet sind.

## Claims

1. A ground covering composed of interlocking paving elements of recycled plastics material and having a drainage system,
there being provided between the adjacent interlocking paving elements, which are laid in the style of a mosaic, gaps (21) in the paving which guide the surface water in the direction of the paving lower edge, and which have an approximately constant width as seen from above,
there being provided in the bottom surfaces (11) of the interlocking paving elements (10, 20) one or more central cutouts (12),
there being provided in at least some, preferably in all of the side walls (14) extending preferably perpendicularly to the bottom surface (11), one or more openings (13),
the opening(s) (13) being close to the paving element lower edge (15), preferably including the paving element lower edge (15), that is to say having a shape which is open at the bottom, and connecting the gaps (21), formed by the external surfaces of the side walls (14), in the paving to the central cutout(s) (12) to make a grid-like drainage system, and
the central cutout(s) (12) having a relatively large surface area in relation to the bottom surfaces (11) of the interlocking paving elements (10, 20), and forming an internal cavity which is enclosed at least by the side walls (14) and a paving element cover (16) for the interlocking paving element and which can take up relatively large quantities of liquid, the side walls (14) and the paving element cover (16) of the interlocking paving element being constructed to be relatively thin in comparison with its bottom surface (11).

2. A ground covering according to Claim 1, characterized in that the openings (13) in the interlocking paving elements are approximately in the centre of the respective side wall (14) between the vertical paving element edges (18).

3. A ground covering according to Claim 1 or 2, characterized in that the openings (13) in the interlocking paving elements extend from the paving element lower edge (15) to approximately half-way up of the paving element.

4. A ground covering according to one of Claims 1 to 3, characterized in that the interlocking paving elements have a hexagonal, in particular regularly hexagonal, or quadrilateral or rectangular or mirror-symmetrical basic outline.

5. A ground covering according to one of Claims 1 to 4, characterized in that the side walls (14) of the interlocking paving elements have approximately the same thickness, and the paving element cover (16) also has approximately this thickness or a greater thickness.

6. A ground covering according to one of Claims 1 to 5, characterized by chamfered surfaces (17) at the upper paving element edges (19) of the interlocking paving elements, having an incline which slopes downwards towards the side walls (14), in particular at an angle of between approximately 10° and 45° relative to the surface of the paving element cover, preferably of approximately 20° to 35°.

7. A ground covering according to one of Claims 1 to 6, characterized in that a plurality of one-part paving elements (10') form a multipart paving element (two-part paving element 20).

8. A ground covering according to Claim 7, characterized in that two mutually adjacent one-part paving elements (10') have a common connecting side wall.

9. An interlocking paving element of recycled plastics material for constructing a drainage system according to one of Claims 1 to 8,
there being provided in the bottom surface (11) of the interlocking paving element (10, 20) one or more central cutouts (12),
there being provided in at least some, preferably in all of the side walls (14) extending preferably perpendicularly to the bottom surface (11), one or more openings (13),
the opening(s) (13) being close to the paving element lower edge (15), preferably including the paving element lower edge (15),
the opening(s) (13) connecting the external surface of the side walls (14) to the central cutout(s) (12), and
the central cutout(s) (12) having a relatively large surface area in relation to the bottom surface (11) of the interlocking paving element (10, 20), and forming an internal cavity which is enclosed at least by the side walls (14) and a paving element cover (16) for the interlocking paving element and which can take up relatively large quantities of liquid, the side walls (14) and the paving element cover (16) of the interlocking paving element being constructed to be relatively thin in comparison with its bottom surface (11).

## Revendications

1. Revêtement de sol composé de pavés autobloquants en matière plastique de recyclage comprenant un système de drainage, des joints de pavé (21), qui sont de largeur approximativement constante en vue de dessus et qui conduisent l'eau de surface en direction du bord inférieur des pavés, étant prévus entre les pavés autobloquants juxtaposés en mosaïque, une ou plusieurs cavité(s) centrale(s) (12) étant prévue(s) dans les surfaces de fond (11) des pavés autobloquants (10, 20),
un ou plusieurs passage(s) (13) étant prévu(s) dans au moins une partie, de préférence dans toutes les parois latérales (14) s'étendant de préférence perpendiculairement à la surface de fond (11),
le(s) passage(s) (13) se trouvant proche(s) du bord inférieur (15) du pavé, de préférence en entaillant le bord inférieur (15) du pavé, c'est-à-dire en présentant une forme ouverte vers le bas, et le(s) joint(s) de pavé (21), formé(s) par les surfaces externes des parois latérales (14), étant reliés aux/à la cavité(s) centrale(s) (12) en réalisant un système de drainage en forme de réseau, et
les/la cavité(s) centrale(s) (12) étant de surface relativement grande en comparaison des surfaces de fond (11) des pavés autobloquants (10, 20) et formant un espace creux interne qui est délimité par au moins les parois latérales (14) ainsi que par un couvercle (16) du pavé autobloquant et dans lequel peuvent être recueillies des quantités de liquide relativement importantes, les parois latérales (14) et le couvercle (16) du pavé autobloquant étant relativement minces en comparaison de sa surface de fond (11).

2. Revêtement de sol selon la revendication 1, caractérisé en ce que les passages (13) des pavés autobloquants se trouvent à peu près au milieu de la paroi latérale respective (14) entre les bords verticaux (18) des pavés.

3. Revêtement de sol selon la revendication 1 ou 2, caractérisé en ce que les passages (13) des pavés autobloquants s'étendent depuis le bord inférieur (15) du pavé jusqu'à environ mi-hauteur de celui-ci.

4. Revêtement de sol selon l'une des revendications 1 à 3, caractérisé en ce que les pavés autobloquants présentent une forme de base hexagonale, en particulier régulièrement hexagonale, également des formes quadrataires ou rectangulaires respectivement symétriques.

5. Revêtement de sol selon l'une des revendications 1 à 4, caractérisé en ce que les épaisseurs des parois latérales (14) des pavés autobloquants sont à peu près égales et en ce que le couvercle de pavé (16) présente de préférence également environ cette épaisseur ou une épaisseur plus importante.

6. Revêtement de sol selon l'une des revendications 1 à 5, caractérisé par des surfaces chanfreinées (17) sur les bords supérieurs (19) des pavés autobloquants suivant une inclinaison descendant en direction des parois latérales (14) en particulier suivant un angle de 10° à 45° par rapport à la surface du couvercle de pavé, de préférence entre 20 et 35°.

7. Revêtement de sol selon l'une des revendications 1 à 6, caractérisé en ce que plusieurs parties de pavé (10') forment un pavé multiple (pavé jumeau 20).

8. Revêtement de sol selon la revendication 7, caractérisé en ce que deux parties de pavé juxtaposées (10') présentent une paroi latérale commune de jonction.

9. Pavé autobloquant en matière plastique de recyclage pour la réalisation d'un système de drainage selon l'une des revendications 1 à 8,
une ou plusieurs cavité(s) centrale(s) (12) étant prévue(s) dans la surface de fond (11) du pavé autobloquant (10, 20), un ou plusieurs passage(s) (13) étant prévu(s) dans au moins une partie, de préférence dans toutes les parois latérales (14) s'étendant de préférence perpendiculairement à la surface de fond (11),
le(s) passage(s) (13) se trouvant proche(s) du bord inférieur (15) du pavé, de préférence en entaillant le bord inférieur (15) du pavé,
le(s) passage(s) (13) reliant la surface externe des parois latérales (14) aux/à la cavité(s) centrale(s) (12), et les/la cavité(s) centrale(s) (12) étant de surface relativement grande en comparaison des surfaces de fond (11) des pavés autobloquants (10, 20) et formant un espace creux interne qui est délimité par au moins les parois latérales (14) ainsi que par un couvercle (16) du pavé autobloquant et dans lequel peuvent être recueillies des quantités de liquide relativement importantes, les parois latérales (14) et le couvercle (16) du pavé autobloquant étant relativement minces en comparaison de sa surface de fond (11).
